# EUROPEAN PATENT SPECIFICATION

(11) **EP 3 492 350 B1**
(45) Date of publication and mention of the grant of the patent: **05.01.2022**
(21) Application number: 18208665.2
(22) Date of filing: 27.11.2018
(51) Int. Cl.: B62D 25/08, B60K 11/04, B60K 13/02, F02M 35/10, F02M 35/16, F02M 35/12

(54) **RADIATOR SUPPORT DUCT MADE OF RESIN**
AUS HARZ GEFERTIGTE KÜHLERTRÄGERLEITUNG
CONDUIT DE SUPPORT DE RADIATEUR CONSTITUÉ DE RÉSINE

(30) Priority: 27.11.2017 JP 2017226854
(43) Date of publication of application: 05.06.2019
(73) Proprietor: TOYOTA JIDOSHA KABUSHIKI KAISHA, Toyota-shi, Aichi-ken, 471-8571 (JP)
(72) Inventor: INAGAKI, Jumpei, TOYOTA-SHI, AICHI-KEN, 471-8571 (JP); TAKEUCHI, Yasuharu, TOYOTA-SHI, AICHI-KEN, 471-8571 (JP); FUJII, Kazuya, NAGOYA-SHI, AICHI-KEN, 461-0004 (JP)
(74) Representative: Cabinet Beau de Loménie

(56) References cited:
- DE-A1- 19 850 589
- DE-A1-102009 039 806
- DE-A1-102010 009 965
- DE-U1-202016 104 444

## Description

### TECHNICAL FIELD

The present disclosure relates to a radiator support duct that is made of a resin and is configured by joining a duct component and a support component, the duct component being arranged on one side in a vehicle longitudinal direction, and the support component being arranged on the other side in the vehicle longitudinal direction.

### BACKGROUND

In WO 2012/115178, a configuration that plural ribs are formed at equally-spaced intervals in an airflow direction of an intake duct on an outer surface of the duct is described.

A radiator support duct made of a resin is considered. The radiator support duct is configured by joining a duct component and a support component that are separated from each other in a vehicle longitudinal direction, and has therein an intake passage, through which the air to be supplied to an engine flows. In the radiator support duct, the support component is joined to a vehicle body, and a radiator is supported on a lower side of the support component. As in the configuration described in WO 2012/115178, in the case where the plural ribs are formed at the equally-spaced intervals in the airflow direction on an outer surface of the duct component constituting such a radiator support duct, there is a possibility that rigidity of the duct component is excessively increased. Thus, there is room for improvement in reducing weight of the duct component.

DE 20 2016104444 discloses a frame-like mounting bracket.

### SUMMARY

The present disclosure has a purpose of reducing weight of a duct component in a radiator support duct that is made of a resin while securing required rigidity of the duct component.

A radiator support duct made of a resin according to the present disclosure is a radiator support duct made of a resin that is configured by joining a duct component that is arranged on one side in a vehicle longitudinal direction and a support component that is arranged on the other side in the vehicle longitudinal direction, that has therein an intake passage, through which air to be supplied to an engine flows, from a first end portion toward a second end portion in a vehicle width direction, in which both end portions of the support component in the vehicle width direction are joined to a vehicle body, and in which a radiator is supported on a lower side of the support component. In a main body area as an area in the vehicle width direction, the duct component includes rigid ribs that are at least formed on an outer surface toward the second end in the vehicle width direction from a reference point centrally located in the vehicle width direction, and the main body area is defined by excluding portions, in which all openings for introducing air or discharging the air are located in end portions in the vehicle width direction, from an elongated portion that extends in the vehicle width direction. In the main body area, the number of the rigid ribs is larger from the reference point toward the second end than toward the first end in the vehicle width direction.

According to the above configuration, in the main body area of the duct component, the large number of the rigid ribs are provided toward the second end in the vehicle width direction. The second end side in the vehicle width direction corresponds to a downstream side of an airflow and is significantly influenced by a pulsation pressure of intake air from the engine. Meanwhile, in the main body area, as compared to the downstream side of the airflow, the small number of the rigid ribs are provided toward the first end in the vehicle width direction. The first end side in the vehicle width direction corresponds to an upstream side of the airflow and is hardly or slightly influenced by the pulsation pressure of the intake air. In this way, weight of the duct component can be reduced while required rigidity thereof is secured.

The radiator support duct made of the resin according to the present disclosure can be configured such that the rigid ribs formed on the second end in the vehicle width direction from the reference point in the main body area include: a first oblique rib that is formed in a direction tilted downward toward the second end in the vehicle width direction; and a second oblique rib that is formed in a direction tilted upward toward the second end in the vehicle width direction and crosses the first oblique rib.

According to the above configuration, the other end portion of the main body area in the vehicle width direction includes the first oblique rib and the second oblique rib that follow the two different directions. Thus, rigidity of such a portion of the main body area is easily increased.

The radiator support duct made of the resin according to the present disclosure can be configured such that the support component and the duct component are joined to each other when plural support locking sections that are formed in both end portions of the support component in a vertical direction and plural duct locking sections that are formed in both end portions of the duct component in the vertical direction are locked and such that, near one of the plural duct locking sections located on one side in the vertical direction, at least one end of each of the first oblique rib and the second oblique rib in the vertical direction is arranged at a position in the vehicle width direction that corresponds to the one of the plural duct locking sections on the one side in the vertical direction.

According to the above configuration, in the other end portion of the main body area in the vehicle width direction, application of a force on the first oblique rib and the second oblique rib from the support component is facilitated. Thus, the rigidity of such a portion of the main body area can be increased efficiently.

The radiator support duct made of the resin according to the present disclosure can be configured such that the rigid ribs formed on the second end in the vehicle width direction from the reference point in the main body area include an intermediate rib that is formed vertically along the outer surface of the main body area in a manner to cross an intersection of the first oblique rib and the second oblique rib.

According to the above configuration, the second end portion of the main body area in the vehicle width direction includes the first oblique rib, the second oblique rib, and the intermediate rib that follow the three different directions. Thus, the rigidity of such a portion of the main body area is easily increased.

The radiator support duct made of the resin according to the present disclosure can be configured such that the support component and the duct component are joined to each other when support locking sections that are formed in both end portions of the support component in the vertical direction and duct locking sections that are formed in both end portions of the duct component in the vertical direction are locked and such that, near the duct locking section located on the one side in the vertical direction, at least one end of the intermediate rib in the vertical direction is arranged at a position in the vehicle width direction that corresponds to the duct locking section on the one side in the vertical direction.

According to the above configuration, in the other end portion of the main body area in the vehicle width direction, the application of the force on the intermediate rib from the support component is facilitated. Thus, the rigidity of such a portion of the main body area can be increased efficiently.

According to the radiator support duct made of the resin in the present disclosure, the weight of the duct component is reduced while the required rigidity thereof is secured.

### BRIEF DESCRIPTION OF DRAWINGS

Embodiment(s) of the present disclosure will be described by reference to the following figures, wherein:
FIG. 1 is a perspective view of a radiator support duct made of a resin in an embodiment according to the present disclosure;
FIG. 2 is a perspective view of a support component that constitutes the radiator support duct made of the resin;
FIG. 3 is a view in which the support component illustrated in FIG. 2 is seen from a rear side in a vehicle longitudinal direction;
FIG. 4 is a perspective view of a duct component that constitutes the radiator support duct made of the resin;
FIG. 5 is a view in which the duct component illustrated in FIG. 4 is seen from the rear side in the vehicle longitudinal direction;
FIG. 6 is an enlarged cross-sectional view that is taken along A-A in FIG. 5;
FIG. 7 is an enlarged view of a left half portion in FIG. 5 and is a view of first set positions of rigid ribs at the time of designing the ribs;
FIG. 8 is an enlarged view of the left half portion in FIG. 5 and is a view of second set positions of the rigid ribs at the time of designing the ribs; and
FIG. 9 is a perspective view of a radiator support duct made of a resin in a comparative example.

### DESCRIPTION OF EMBODIMENTS

A description will hereinafter be made on an embodiment of the present disclosure by reference to the drawings. Shapes, materials, numbers, and numerical values, which will be described below, are merely provided as examples for the description and can be changed appropriately in accordance with a specification of a vehicle that includes a radiator support duct made of a resin, and the like. Hereinafter, equivalent elements will be denoted by the same reference signs for the description in all the drawings. In addition, previously mentioned reference signs will be used in the description of the embodiment when necessary.

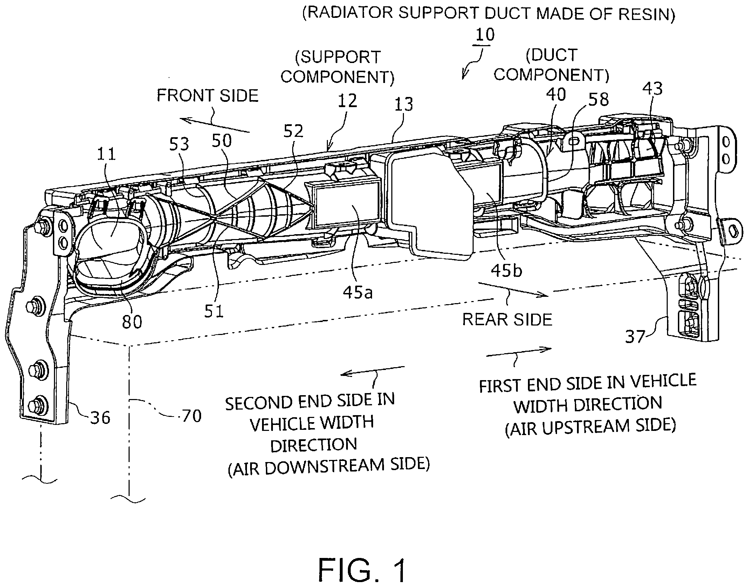

FIG. 1 is a perspective view of a radiator support duct 10 made of a resin in the embodiment. In a front portion of the vehicle (not illustrated), the radiator support duct 10 made of the resin is fixed to a vehicle body along a vehicle width direction (a lateral direction in FIG. 1). A radiator 70 is supported on a lower side of the radiator support duct 10 made of the resin, and the radiator support duct 10 made of the resin constitutes a part of an intake system of an engine (not illustrated). Hereinafter, the radiator support duct 10 made of the resin will be described as the radiator support duct 10.

More specifically, the radiator support duct 10 is configured by joining a support component 12 and a duct component 40. The support component 12 is made of the resin and is arranged on a front side as one side in a vehicle longitudinal direction. The duct component 40 is made of the resin and is arranged on a rear side as the other side in the vehicle longitudinal direction. In the radiator support duct 10, an intake passage 11 through which air to be supplied to the engine flows is provided from a first end portion (a right end portion in FIG. 1) to a second end portion (a left end portion in FIG. 1) in the vehicle width direction. The radiator support duct 10 includes: an air inlet (not illustrated) that is formed on the front side of the one end portion in the vehicle width direction; and an air outlet 80 that is formed on the rear side of the other end portion in the vehicle width direction. The air inlet is connected to an end portion of the intake passage 11 on an upstream side of an airflow. The air outlet 80 is connected to an end portion of the intake passage 11 on a downstream side of the airflow.

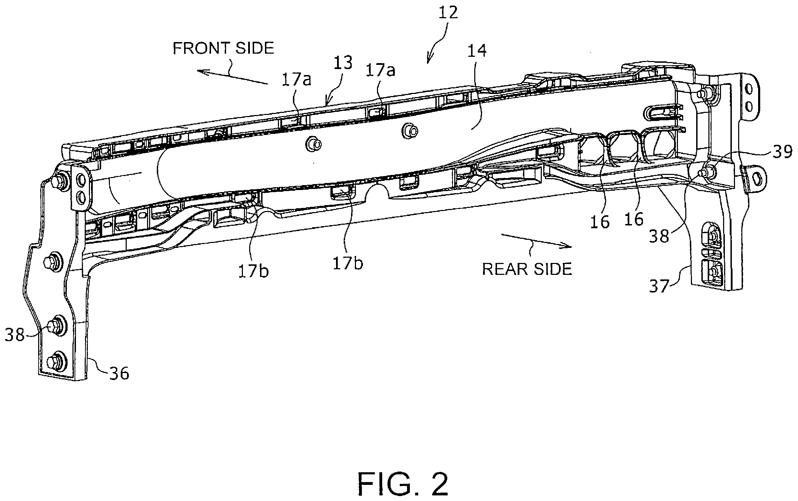

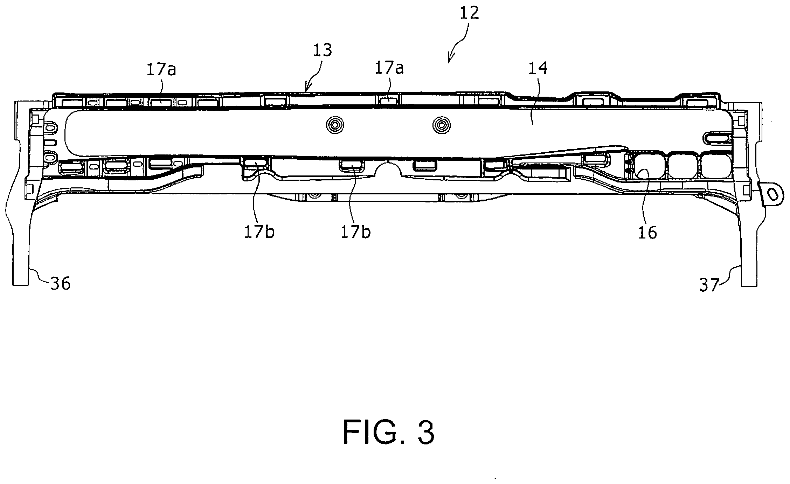

FIG. 2 is a perspective view of the support component 12 that constitutes the radiator support duct 10. FIG. 3 is a view in which the support component 12 is seen from the rear side in the vehicle longitudinal direction.

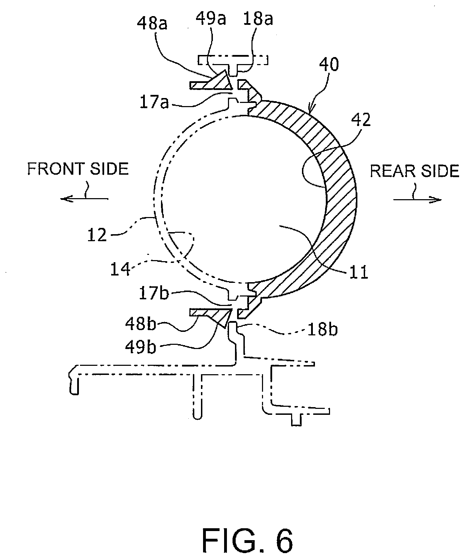

The support component 12 includes: an elongated main body 13 that is formed substantially along the vehicle width direction (a lateral direction in FIG. 2 and FIG. 3); and two legs 36, 37 that are formed to extend downward in both end portions of the main body 13 in the vehicle width direction. On a rear surface (a front surface of the sheet of each of FIG. 2 and FIG. 3), the main body 13 has a front-side recessed surface 14 that is formed substantially along the vehicle width direction. The front-side recessed surface 14 is assembled to a rear-side recessed surface 42 (FIG. 6) that is formed in the duct component 40 described below. In this way, the intake passage 11 (FIG. 6) is formed.

In each of the two legs 36, 37, through holes (not illustrated) are formed at plural positions. A bolt 38 is inserted through each of the through holes. By using the bolts 38 and nuts 39 that are joined to the bolts 38, each of the two legs 36, 37 is joined and fixed to a side panel (not illustrated) that is located at each end portion of the vehicle body in the vehicle width direction or to a coupling member (not illustrated) that is fixed to the side panel. In this way, both end portions of the support component 12 in the vehicle width direction are joined to the vehicle body.

Furthermore, an insertion section (not illustrated) that is formed in an upper portion of the radiator 70 is inserted in a hole (not illustrated) that is formed on a lower side in an intermediate portion of the support component 12 in the vehicle width direction. In this way, the radiator 70 is supported on the lower side of the support component 12.

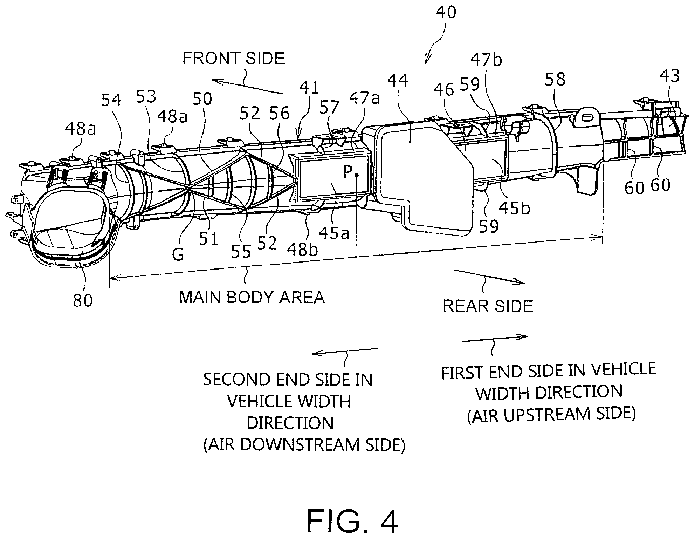

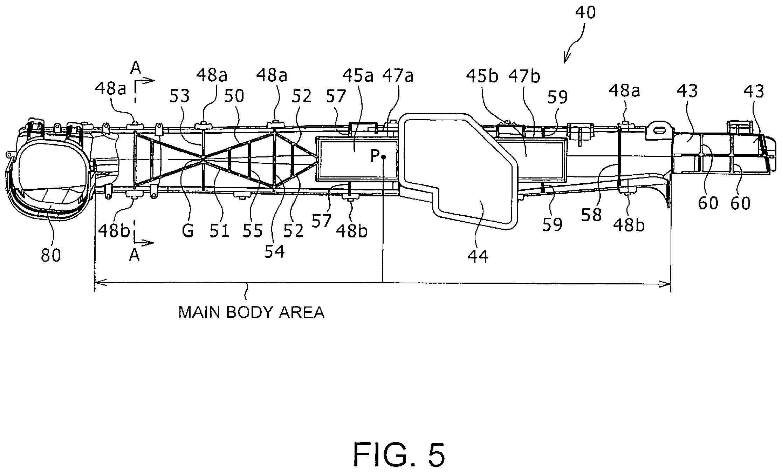

In the one end portion (the right end portion in FIG. 2 and FIG. 3) in the vehicle width direction of the main body 13, which constitutes the support component 12, the air inlet (not illustrated) is formed on the front side of a lower end portion. Furthermore, in the one end portion in the vehicle width direction of the main body 13, three water drain ports 16 are formed on the rear side that opposes the air inlet. The water drain ports 16 are formed on a lower side of one end portion of the front-side recessed surface 14 in the vehicle width direction. As will be described below, in a state where the support component 12 and the duct component 40 (FIG. 4 and FIG. 5) are joined to each other, the air inlet is connected to the upstream end portion of the intake passage 11 (FIG. 1 and FIG. 6). For this configuration, an opening (not illustrated) that communicates with the air inlet is formed between a lower end of the one end portion of the front-side recessed surface 14 in the vehicle width direction and a lower end of one end portion of the rear-side recessed surface 42 (FIG. 6) of the duct component 40 in the vehicle width direction. In this state, the air inlet also communicates with the water drain ports 16 on the rear side. Accordingly, in the case where water enters the air inlet from the front side of the vehicle, the water can be drained to the rear side from the water drain ports 16. Thus, entry of water into the intake passage 11 on an upper side can be suppressed.

Furthermore, in both of upper and lower end portions of the main body 13 in the support component 12, holes 17a, 17b, each of which has a rectangular cross section, are formed at plural positions in the vehicle width direction. A projection 18a (FIG. 6) that is projected downward is formed on an upper inner surface of each of the upper holes 17a. Meanwhile, a projection 18b (FIG. 6) that is projected upward is formed on a lower inner surface of each of the lower holes 17b. When the duct component 40, which will be described below, is joined to the support component 12, claws 48a, 48b (FIG. 6), each of which constitutes a duct locking section of the duct component 40, are respectively locked in the holes 17a, 17b. The holes 17a, 17b and the projections 18a, 18b constitute a support locking section.

FIG. 4 is a perspective view of the duct component 40 that constitutes the radiator support duct 10. FIG. 5 is a view in which the duct component 40 is seen from the rear side in the vehicle longitudinal direction. FIG. 6 is an enlarged cross-sectional view that is taken along A-A in FIG. 5.

The duct component 40 includes: a long portion 41 that extends substantially along the vehicle width direction (a lateral direction in FIG. 4 and FIG. 5); and the air outlet 80 as an opening for discharging the air. On a front surface (a back surface of the sheet of each of FIG. 4 and FIG. 5), the long portion 41 has the rear-side recessed surface 42 (FIG. 6) that is formed substantially along the vehicle width direction. Together with the front-side recessed surface 14 (FIG. 6) that is formed in the support component 12, the rear-side recessed surface 42 forms the intake passage 11.

The air outlet 80 has a tube like shape and is formed to be projected obliquely downward from a rear surface of the second end portion (a left end portion in FIG. 4 and FIG. 5) of the long portion 41 in the vehicle width direction. A duct on an air cleaner side (not illustrated) is connected to an opening end of the air outlet 80. The air that is delivered from the radiator support duct 10 to the duct on the air cleaner side is supplied to the engine (not illustrated) via the air cleaner (not illustrated) and another duct that is connected to the air cleaner.

The duct component 40 is formed of a resin, whose strength is less than strength of a resin constituting the support component 12 described above. In this way, formability of the duct component 40 that is configured to have a complex shape is improved. Meanwhile, the high strength is required for the support component 12 in order to support the radiator 70. In this case, because the resin with the high strength is used for the support component 12, the strength of the support component 12 is easily increased. The duct component 40 is not required to have as high strength as the support component 12. In this way, strength of the radiator support duct 10 can differ by portions in accordance with the required strength.

In addition, in upper and lower end portions of the duct component 40, the claws 48a, 48b, each of which constitutes the duct locking section, are formed at plural positions in the vehicle width direction.

The plural claws 48a, 48b are formed at the positions that oppose the plural holes 17a, 17b of the support component 12 illustrated in FIG. 2 and FIG. 3. The claws 48a, 48b are formed to be projected forward from the upper end portion and the lower end portion of the duct component 40, respectively. As illustrated in FIG. 6, a chevron portion 49a that is projected upward is formed in a front portion of the upper claw 48a. A chevron portion 49b that is projected downward is formed in a front portion of the lower claw 48b. When the duct component 40 and the support component 12 are joined to each other, the plural claws 48a, 48b of the duct component 40 are respectively inserted in the plural holes 17a, 17b of the support component 12. Along with the insertion, the plural claws 48a, 48b are elastically deformed, and the chevron portions 49a, 49b are locked by the projections 18a, 18b, which are formed on the inner surfaces of the plural holes 17a, 17b in the support component 12. In this way, the duct component 40 and the support component 12 are joined to each other.

In the above state, the front-side recessed surface 14 of the support component 12 and the rear-side recessed surface 42 of the duct component 40 are assembled. In this way, the long intake passage 11 is formed. The first end portion of the intake passage 11 as the end portion on the upstream side of the airflow is connected to the air inlet. The second end portion of the intake passage 11 as the end portion on the downstream side of the airflow is connected to the air outlet 80.

In the first end portion (the right end portion in FIG. 4 and FIG. 5) of the duct component 40 in the vehicle width direction, plural secondary air inlets 43 are formed in a portion where the one end portion of the intake passage 11 is located in the inside. Each of the secondary air inlets 43 is a secondary opening for introducing the air. The air is introduced into the intake passage 11 through the secondary air inlets 43 when the air inlet on the lower side of the secondary air inlets 43 is closed due to submersion of the vehicle or the like.

A first intake noise reducer 44 that is projected rearward is formed in an intermediate portion of the duct component 40 in the vehicle width direction. The first intake noise reducer 44 is configured to include a resonator. A space is formed in the inside of the first intake noise reducer 44, and the space communicates with the intake passage 11 through a communication path (not illustrated) that penetrates the rear-side recessed surface 42 (FIG. 6) in the longitudinal direction. In this way, the first intake noise reducer 44 has a function of reducing intake noise.

In addition, in the intermediate portion of the duct component 40 in the vehicle width direction, two second intake noise reducers 45a, 45b are arranged at adjacent positions in the vehicle width direction with the first intake noise reducer 44 being interposed therebetween. Each of the second intake noise reducers 45a, 45b is configured to include: a hole that has a rectangular cross section and is formed in the duct component 40; and rectangular unwoven cloth 46 that is arranged to be fitted to the hole. Similar to the first intake noise reducer 44, each of such second intake noise reducers 45a, 45b has a function of reducing the intake noise. Note that the radiator support duct 10 may be configured to include only the first intake noise reducer 44 or the paired second intake noise reducers 45a, 45b.

The duct component 40 further includes, as plural rigid ribs that are formed on an outer surface thereof, a first oblique rib 50, a second oblique rib 51, two third oblique ribs 52, an intermediate rib 53, plural first vertical ribs 54, 55, 56, 57, and plural second vertical ribs 58, 59. In the long portion 41 of the duct component 40, the plural rigid ribs are formed on an outer surface within a main body area. Here, the "main body area" is an area of the long portion 41 in the vehicle width direction except for portions where the secondary air inlets 43 and the air outlet 80 as all of the openings for introducing the air and discharging the air are located in both of the end portions in the vehicle width direction. In the main body area, the first oblique rib 50, the second oblique rib 51, the third oblique ribs 52, the intermediate rib 53, and the first vertical ribs 54, 55, 56 are formed on the outer surface toward the second end side (leftward in FIG. 4 and FIG. 5) in the vehicle width direction as the downstream side of the airflow from a reference point P (FIG. 4 and FIG. 5) centrally located in the vehicle width direction. Meanwhile, in the main body area, the plural second vertical ribs 58, 59 are formed on the outer surface toward the first end (the right side in FIG. 4 and FIG. 5) in the vehicle width direction on the upstream side of the airflow from the reference point P. Accordingly, in the main body area, the number of the rigid ribs from the reference point P toward the second end in the vehicle width direction is larger than the number of the rigid ribs toward the first end in the vehicle width direction.

Note that it may be the case that the secondary air inlets 43 are not provided in the long portion 41. In such a case, one end of the main body area in the vehicle width direction extends to the first end of the duct component 40 in the vehicle width direction, and the reference point P moves toward the first end in the vehicle width direction.

Hereinafter, a detailed description will be made on positions and shapes of the plural rigid ribs. In the main body area, the first oblique rib 50, the second oblique rib 51, the third oblique ribs 52, the intermediate rib 53, and the first vertical ribs 54, 55, 56 are formed on the outer surface between the air outlet 80 and the second intake noise reducer 45a on the second end (the left side in FIG. 4 and FIG. 5) in the vehicle width direction. The first oblique rib 50 and the second oblique rib 51 are arranged in an X-shape.

More specifically, the first oblique rib 50 is formed in a direction downwardly tilted toward the second end (leftward in FIG. 4 and FIG. 5) in the vehicle width direction. The second oblique rib 51 is formed in a direction upwardly tilted toward the second end in the vehicle width direction and defines the X shape by crossing the first oblique rib 50. In this way, the other end portion of the main body area in the vehicle width direction includes the first oblique rib 50 and the second oblique rib 51 that follow the two different directions. Thus, the rigidity of such a portion of the main body area is easily increased.

Furthermore, near the plural claws 48a or 48b located on one side in the vertical direction, at least one end of each of the first oblique rib 50 and the second oblique rib 51 in the vertical direction is arranged at such a position in the vehicle width direction (the lateral direction in FIG. 4 and FIG. 5) that corresponds to one of the plural claws 48a or 48b on the one side in the vertical direction.

More specifically, near the claw 48a located on the upper side, an upper end of the first oblique rib 50 is arranged at a position in the vehicle width direction that corresponds to the claw 48a on the upper side. Near the claw 48b located on the lower side, a lower end of the first oblique rib 50 is arranged at a position in the vehicle width direction that corresponds to the claw 48b on the lower side. Near the claw 48a located on the upper side, an upper end of the second oblique rib 51 is arranged at a position in the vehicle width direction that corresponds to the claw 48a on the upper side. In this way, in the other end portion of the main body area in the vehicle width direction, application of a force on the first oblique rib 50 and the second oblique rib 51 from the support component 12 is facilitated. Thus, the rigidity of such a portion of the main body area can be increased efficiently.

Note that, near the claw 48b located on the lower side, a lower end of the second oblique rib 51 may be arranged at a position in the vehicle width direction that corresponds to the claw 48b on the lower side. In addition, near the claw 48b located on the lower side, only the lower end among the upper end and the lower end of each of the first oblique rib 50 and the second oblique rib 51 may be arranged at the position in the vehicle width direction that corresponds to the claw 48b on the lower side.

The two third oblique ribs 52 are connected to the end of the first oblique rib 50 and the end of the second oblique rib 51 toward the first end (rightward in FIG. 4 and FIG. 5) in the vehicle width direction. The two third oblique ribs 52 are tilted in reverse directions from each other with respect to the vertical direction such that the two third oblique ribs 52 approach each other toward the first end in the vehicle width direction.

The intermediate rib 53 is formed vertically along the outer surface of the main body area in a manner to pass an intersection G between the first oblique rib 50 and the second oblique rib 51. In this way, the other end portion of the main body area in the vehicle width direction includes the first oblique rib 50, the second oblique rib 51, and the intermediate rib 53 that follow the three different directions. Thus, the rigidity of such a portion of the main body area is easily increased.

In addition, near the claw 48a located on the upper side, an upper end of the intermediate rib 53 is arranged at a position in the vehicle width direction that corresponds to the claw 48a on the upper side. In this way, in the other end portion of the main body area in the vehicle width direction, the application of the force on the intermediate rib 53 from the support component 12 is facilitated. Thus, the rigidity of such a portion of the main body area can be increased efficiently. Note that, in addition to such a configuration for the intermediate rib 53 or instead of such a configuration for the intermediate rib 53, near the claw 48b located on the lower side, a lower end of the intermediate rib 53 may be arranged at a position in the vehicle width direction that corresponds to the claw 48b on the lower side.

At a position between the first oblique rib 50 and the second oblique rib 51, each of the plural first vertical ribs 54, 55 as some of the plural first vertical ribs is formed vertically along the outer surface of the main body area in a manner to couple the first oblique rib 50 and the second oblique rib 51. In addition, at a position between the two third oblique ribs 52, the first vertical rib 56 as one of the plural first vertical ribs is formed vertically along the outer surface of the main body area in a manner to couple the two third oblique ribs 52. On the outer surface of the main body area, the remaining first vertical rib 57 is connected to an upper end and a lower end of a wall 47a in a rectangular tube shape and is formed vertically along the outer surface of the main body area. In the wall 47a, the unwoven cloth 46 of the second intake noise reducer 45a on the second end in the vehicle width direction is provided.

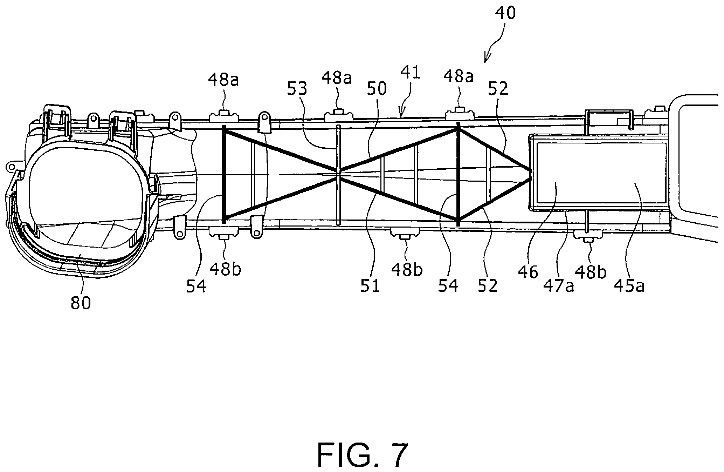

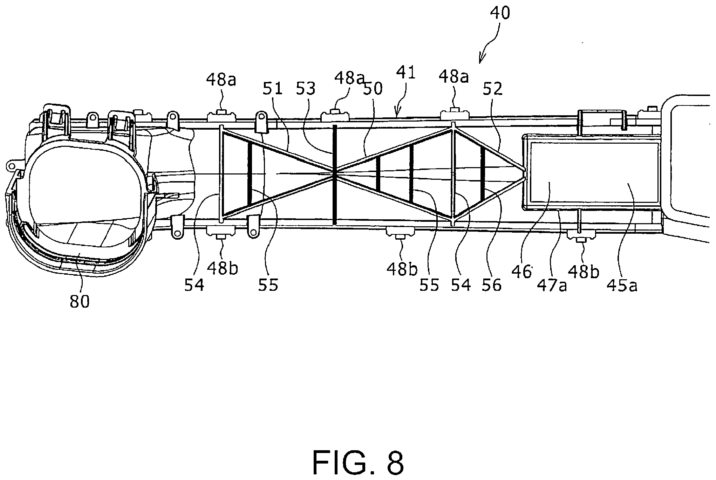

FIG. 7 is an enlarged view of a left half portion in FIG. 5 and is a view of first set positions of the rigid ribs at the time of designing the ribs. FIG. 8 is an enlarged view of the left half portion in FIG. 5 and is a view of second set positions of the rigid ribs at the time of designing the ribs.

In the case where the rigid ribs are set on the second end of the main body area in the vehicle width direction at the time of designing, first, as indicated by bold black lines in FIG. 7, the first oblique rib 50, the second oblique rib 51, and the third oblique ribs 52 are set on the basis of the relationships thereof with the locations of the upper and lower claws 48a, 48b. In addition, the two first vertical ribs 54 that are the longest of all the first vertical ribs are set to vertically connect both of the upper and lower ends of the first oblique rib 50 and the second oblique rib 51. The first oblique rib 50, the second oblique rib 51, the third oblique ribs 52, and the two longest first vertical ribs 54 are set as plural base lines provided to suppress displacement of the main body area.

Next, as indicated by bold black lines in FIG. 8, the intermediate rib 53 is set on the basis of the relationships thereof with the locations of the first oblique rib 50, the second oblique rib 51, and the upper claw 48a. In addition, the plural first vertical ribs 55 are set between intermediate portions of the first oblique rib 50 and the second oblique rib 51, and the first vertical rib 56 is set between intermediate portions of the two third oblique ribs 52. In this way, the intermediate rib 53 and the plural first vertical ribs 55, 56 are set such that the application of the force on the above base lines is facilitated and the large surface of the main body area is divided.

Returning to FIG. 4 and FIG. 5, the plural second vertical ribs 58, 59 are formed on the outer surface between the secondary air inlets 43 and the first intake noise reducer 44 in the main body area. The second vertical rib 58 as one of the plural second vertical ribs is formed vertically along the outer surface of the main body area. Near the claw 48a located on the upper side, an upper end of the second vertical rib 58 is arranged at a position in the vehicle width direction that corresponds to the claw 48a on the upper side. In addition, near the claw 48b located on the lower side, a lower end of the second vertical rib 58 is arranged at a position in the vehicle width direction that corresponds to the claw 48b on the lower side.

On the outer surface of the main body area, the remaining second vertical rib 59 is connected to an upper end and a lower end of a wall 47b in a rectangular tube shape and is formed vertically along the outer surface of the main body area. In the wall 47b, the unwoven cloth 46 of the second intake noise reducer 45b toward the first end in the vehicle width direction is provided. Note that it may be the case that the first vertical rib 57 and the second vertical rib 59, which are respectively connected to the walls 47a, 47b on both of the sides in the vehicle width direction, are not provided. In addition, it may be the case that the second vertical rib 58, which is formed on the outer surface of the main body area toward the first end in the vehicle width direction, is not provided, so long as the rigidity of the outer surface in the portion toward the first end in the vehicle width direction can be secured.

According to the radiator support duct 10 described above, in the main body area of the duct component 40, the large number of the rigid ribs are provided toward the second end in the vehicle width direction. The second end in the vehicle width direction corresponds to the downstream side of the airflow and is significantly influenced by a pulsation pressure of the intake air from the engine. Meanwhile, in the main body area of the duct component 40, as compared to the downstream side of the airflow, the small number of the rigid ribs are provided toward the first end in the vehicle width direction. The first end in the vehicle width direction corresponds to the upstream side of the airflow and is hardly or slightly influenced by the pulsation pressure of the intake air from the engine. In this way, weight of the duct component 40 can be reduced while the required rigidity of the duct component 40 is secured. In addition, since an amount of the material used for the duct component 40 can be reduced, cost of the duct component 40 can be reduced. Furthermore, since the rigidity of the duct component 40 can be secured, vibrations and noise during driving of the vehicle can be reduced.

The radiator support duct 10 in this embodiment can be used to constitute an intake system of an inline three-cylinder engine, for example. In such an engine, the intake pulsations in the intake system tend to be increased. Thus, an effect of using the radiator support duct 10 in the embodiment is even more remarkable.

In the example illustrated in FIG. 5, an opening edge rib 60 is formed at an opening edge of each of the plural secondary air inlets 43, which are located on the outside of the main body area, in the duct component 40. The opening edge ribs 60 are formed to prevent a reduction in the rigidity of the duct component 40 that is caused by forming the secondary air inlets 43.

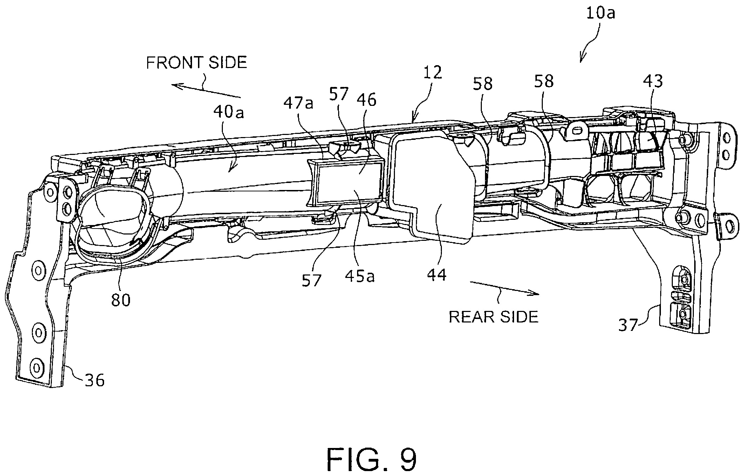

FIG. 9 is a perspective view of a radiator support duct 10a in a comparative example. The radiator support duct 10a in the comparative example differs from the radiator support duct 10 in the embodiment illustrated in FIG. 1 to FIG. 8 in a point that the second intake noise reducer 45b (see FIG. 1 and the like) toward the first end (rightward in FIG. 9) in the vehicle width direction is not arranged in a duct component 40a. In addition, in the radiator support duct 10a of the comparative example, the two long second vertical ribs 58 are arranged nearby on the outer surface toward the first end in the vehicle width direction. Furthermore, the wall 47a, which has the unwoven cloth 46 of the second intake noise reducer 45a therein, and the first vertical rib 57, which is connected to the wall 47a, are provided on the outer surface of the duct component 40a toward the second end in the vehicle width direction. In the duct component 40a, the rigid ribs other than the first vertical rib 57, which is connected to the wall 47a, are not arranged on the outer surface toward the second end in the vehicle width direction. In such a comparative example, in order to secure the equivalent surface rigidity to that in the embodiment, the entire duct component 40a has to be thicker than the duct component 40 in the embodiment. For this reason, weight of the radiator support duct 10a in the comparative example tends to be increased.

The inventor of the present disclosure used the radiator support ducts 10, 10a in the embodiment illustrated in FIG. 1 to FIG. 8 and the comparative example illustrated in FIG. 9 and checked the surface rigidity of the main body area toward the second end in the vehicle width direction in each of the duct components 40, 40a by a CAD analysis. In the CAD analysis, an internal pressure of each of the radiator support ducts 10, 10a was increased such as by causing high-pressure gas to flow therethrough. Then, a displacement amount of the outer surface of the main body area in such a case was calculated. As a result, it was found that the displacement amount of the outer surface in the embodiment could be as small as that in the comparative example while the thickness of the duct component 40 in the embodiment was reduced. For example, in the case where the thickness of the duct component 40a in the comparative example was set to 2.9 mm and the thickness of the duct component 40 in the embodiment was set to 2.0 mm, a maximum value of the displacement amount of the outer surface in the embodiment could be equal to a maximum value of the displacement amount of the outer surface in the comparative example. In the case where the thickness of the duct component 40 could be reduced, the weight of the duct component 40 could be reduced. Thus, according to the embodiment, it was confirmed that the weight of the duct component 40 could be reduced while the required rigidity of the duct component 40 was secured.

In the above embodiment, the description has been made on the case where the duct locking section of the duct component 40 is configured to include the claws 48a, 48b and the support locking section of the support component 12 is configured to include the holes 17a, 17b and the projections 18a, 18b, which are respectively projected from the holes 17a, 17b. However, the duct locking section may be configured to include a hole and a projection that is projected from the hole, the support locking section may be configured to include a claw, and the duct locking section and the support locking section may be configured to be locked to each other.

In addition, the description has been made on the case where the duct component 40 is arranged on the rear side of the support component 12 in the vehicle longitudinal direction. However, it may be configured that the duct component may be arranged on the front side of the support component in the vehicle longitudinal direction and that the duct component is joined to the support component. At this time, the air inlet is formed in the duct component on the front side, the air outlet is formed on the support component on the rear side, and the duct on the air cleaner side is connected to the air outlet.

## Claims

1. A radiator support duct (10) made of a resin, the radiator support duct (10) comprising a duct component (40) configured to be arranged on one side in a vehicle longitudinal direction and a support component (12) configured to be arranged on the other side in the vehicle longitudinal direction and having an intake passage (11), **characterized in that** the radiator support duct (10) is configured to let air to be supplied to an engine flow through, therein from a first end portion to a second end portion in a vehicle width direction, both end portions of the support component (12) in the vehicle width direction being configured to be joined to a vehicle body, and a lower side of the support component (12) being configured to support a radiator (70), wherein
in a main body area as an area in the vehicle width direction, the duct component (40) includes rigid ribs (50, 51, 52, 53, 54, 55, 56, 57) that are at least formed on an outer surface toward the second end in the vehicle width direction from a reference point (P) centrally located in the vehicle width direction, the main body area being defined by excluding portions, in which all openings (80) for introducing air or discharging the air are located in end portions in the vehicle width direction, from an elongated portion that extends in the vehicle width direction, and
in the main body area, the number of the rigid ribs (50, 51, 52, 53, 54, 55, 56, 57, 58, 59) is larger, from the reference point (P), toward the second end in the vehicle width direction than toward the first end in the vehicle width direction.

2. The radiator support duct (10) made of the resin according to claim 1, wherein
the rigid ribs (50, 51, 52, 53, 54, 55, 56, 57) that are formed in the main body area, from the reference point (P) toward the second end in the vehicle width direction include: a first oblique rib (50) that is formed in a direction downwardly tilted toward the second end in the vehicle width direction; and a second oblique rib (51) that is formed in a direction upwardly tilted toward the second end in the vehicle width direction and crosses the first oblique rib (50).

3. The radiator support duct (10) made of the resin according to claim 2, wherein
the support component (12) and the duct component (40) are joined to each other when plural support locking sections (17a, 17b, 18a, 18b) that are formed in both end portions of the support component (12) in a vertical direction and plural duct locking sections (48a, 48b) that are formed in both end portions of the duct component (40) in the vertical direction are locked, and
near one of the plural duct locking sections (48a, 48b) located on one side in the vertical direction, at least one end of each of the first oblique rib (50) and the second oblique rib (51) in the vertical direction is arranged at a position in the vehicle width direction that corresponds to the one of the plural duct locking sections (48a, 48b) on the one side in the vertical direction.

4. The radiator support duct (10) made of the resin according to claim 2, wherein
the rigid ribs (50, 51, 52, 53, 54, 55, 56, 57) that are formed from the reference point (P) in the main body area toward the second end in the vehicle width direction include an intermediate rib (53) that is formed vertically along the outer surface of the main body area in a manner to cross an intersection of the first oblique rib (50) and the second oblique rib (51).

5. The radiator support duct (10) made of the resin according to claim 4, wherein
the support component (12) and the duct component (40) are joined to each other when support locking sections (17a, 17b, 18a, 18b) that are formed in both end portions of the support component (12) in a vertical direction and duct locking sections (48a, 48b) that are formed in both end portions of the duct component (40) in the vertical direction are locked, and
near the duct locking section (48a) located on one side in the vertical direction, at least one end of the intermediate rib (53) in the vertical direction is arranged at a position in the vehicle width direction that corresponds to the duct locking section (48a) on the one side in the vertical direction.

## Patentansprüche

1. Aus Harz gefertigte Radiatorträgerleitung (10), wobei die Radiatorträgerleitung (10) eine Leitungskomponente (40), die dazu ausgestaltet ist, an einer Seite in einer Fahrzeuglängsrichtung angeordnet zu werden, und eine Trägerkomponente (12) umfasst, die dazu ausgestaltet ist, an der anderen Seite in der Fahrzeuglängsrichtung angeordnet zu werden, und einen Ansaugdurchgang (11) aufweist, **dadurch gekennzeichnet, dass** die Radiatorträgerleitung (10) dazu ausgestaltet ist, Luft, die an einen Motor zugeführt werden soll, darin von einem ersten Endabschnitt zu einem zweiten Endabschnitt in einer Fahrzeugbreitenrichtung durchfließen zu lassen, wobei beide Endabschnitte der Trägerkomponente (12) in der Fahrzeugbreitenrichtung dazu ausgestaltet sind, mit einer Fahrzeugkarosserie verbunden zu werden, und eine untere Seite der Trägerkomponente (12) dazu ausgestaltet ist, einen Radiator (70) zu tragen, wobei
in einem Hauptkörperbereich als einem Bereich in der Fahrzeugbreitenrichtung die Leitungskomponente (40) starre Rippen (50, 51, 52, 53, 54, 55, 56, 57) beinhaltet, die mindestens an einer äußeren Oberfläche von einem Referenzpunkt (P) aus, der sich zentral in der Fahrzeugbreitenrichtung befindet, zu dem zweiten Ende in der Fahrzeugbreitenrichtung hin ausgebildet sind, wobei der Hauptkörperbereich definiert wird, indem Abschnitte, in welchen alle Öffnungen (80) zum Einleiten von Luft oder Abführen der Luft sich in Endabschnitten in der Fahrzeugbreitenrichtung befinden, von einem länglichen Abschnitt ausgenommen werden, der sich in der Fahrzeugbreitenrichtung erstreckt, und
in dem Hauptkörperbereich die Anzahl der starren Rippen (50, 51, 52, 53, 54, 55, 56, 57, 58, 59) von dem Referenzpunkt (P) zu dem zweiten Ende in der Fahrzeugbreitenrichtung hin größer ist als zu dem ersten Ende in der Fahrzeugbreitenrichtung hin.

2. Aus Harz gefertigte Radiatorträgerleitung (10) nach Anspruch 1, wobei
die starren Rippen (50, 51, 52, 53, 54, 55, 56, 57), die in dem Hauptkörperbereich ausgebildet sind, von dem Referenzpunkt (P) zu dem zweiten Ende in der Fahrzeugbreitenrichtung hin beinhalten: eine erste schräge Rippe (50), die in eine zu dem zweiten Ende in der Fahrzeugbreitenrichtung hin nach unten geneigte Richtung ausgebildet ist, und eine zweite schräge Rippe (51), die in einer zu dem zweiten Ende in der Fahrzeugbreitenrichtung hin nach oben geneigte Richtung ausgebildet ist und die erste schräge Rippe (50) kreuzt.

3. Aus Harz gefertigte Radiatorträgerleitung (10) nach Anspruch 2, wobei
die Trägerkomponente (12) und die Leitungskomponente (40) miteinander verbunden sind, wenn mehrere Trägerverriegelungssektionen (17a, 17b, 18a, 18b), die in beiden Endabschnitten der Trägerkomponente (12) in einer vertikalen Richtung ausgebildet sind, und mehrere Leitungsverriegelungssektionen (48a, 48b), die in beiden Endabschnitten der Leitungskomponente (40) in der vertikalen Richtung ausgebildet sind, verriegelt sind, und
nahe einer der mehreren Leitungsverriegelungssektionen (48a, 48b), die sich an einer Seite in der vertikalen Richtung befindet, mindestens ein Ende von jeder von der ersten schrägen Rippe (50) und der zweiten schrägen Rippe (51) in der vertikalen Richtung an einer Position in der Fahrzeugbreitenrichtung angeordnet ist, die der einen der mehreren Leitungsverriegelungssektionen (48a, 48b) an der einen Seite in der vertikalen Richtung entspricht.

4. Aus Harz gefertigte Radiatorträgerleitung (10) nach Anspruch 2, wobei
die starren Rippen (50, 51, 52, 53, 54, 55, 56, 57), die von dem Referenzpunkt (P) aus in dem Hauptkörperbereich zu dem zweiten Ende in der Fahrzeugbreitenrichtung hin ausgebildet sind, eine Zwischenrippe (53) beinhalten, die vertikal entlang der äußeren Oberfläche des Hauptkörperbereichs auf eine Weise ausgebildet ist, dass sie einen Schnittpunkt der ersten schrägen Rippe (50) und der zweiten schrägen Rippe (51) kreuzt.

5. Aus Harz gefertigte Radiatorträgerleitung (10) nach Anspruch 4, wobei
die Trägerkomponente (12) und die Leitungskomponente (40) miteinander verbunden sind, wenn Trägerverriegelungssektionen (17a, 17b, 18a, 18b), die in beiden Endabschnitten der Trägerkomponente (12) in einer vertikalen Richtung ausgebildet sind, und Leitungsverriegelungssektionen (48a, 48b), die in beiden Endabschnitten der Leitungskomponente (40) in der vertikalen Richtung ausgebildet sind, verriegelt sind, und
nahe der Leitungsverriegelungssektion (48a), die sich an einer Seite in der vertikalen Richtung befindet, mindestens ein Ende der Zwischenrippe (53) in der vertikalen Richtung an einer Position in der Fahrzeugbreitenrichtung angeordnet ist, die der Leitungsverriegelungssektion (48a) an der einen Seite in der vertikalen Richtung entspricht.

## Revendications

1. Conduit de support de radiateur (10) fabriqué en résine, le conduit de support de radiateur (10) comprenant un composant de conduit (40) configuré pour être disposé sur un côté dans une direction longitudinale de véhicule et un composant de support (12) configuré pour être disposé de l'autre côté dans la direction longitudinale de véhicule et ayant un passage d'admission (11), **caractérisé en ce que** le conduit de support de radiateur (10) est configuré pour laisser de l'air devant être délivré à un moteur s'écouler au travers, depuis une première partie d'extrémité jusqu'à une deuxième partie d'extrémité dans une direction de largeur de véhicule, les deux parties d'extrémité du composant de support (12) dans la direction de largeur de véhicule étant configurées pour être reliées à une carrosserie de véhicule, et un côté inférieur du composant de support (12) étant configuré pour supporter un radiateur (70), dans lequel
dans une zone de corps principal en tant que zone dans la direction de largeur de véhicule, le composant de conduit (40) comprend des nervures rigides (50, 51, 52, 53, 54, 55, 56, 57) qui sont au moins formées sur une surface extérieure vers la deuxième extrémité dans la direction de largeur de véhicule par rapport à un point de référence (P) situé de manière centrale dans la direction de largeur de véhicule, la zone de corps principal étant définie en excluant des parties, dans lesquelles toutes les ouvertures (80) pour introduire de l'air ou refouler de l'air se trouvent dans des parties d'extrémité dans la direction de largeur de véhicule, d'une partie allongée qui s'étend dans la direction de largeur de véhicule, et
dans la zone de corps principal, le nombre de nervures rigides (50, 51, 52, 53, 54, 55, 56, 57, 58, 59) est plus grand, en partant du point de référence (P), vers la deuxième extrémité dans la direction de largeur de véhicule que vers la première extrémité dans la direction de largeur de véhicule.

2. Conduit de support de radiateur (10) fabriqué en résine selon la revendication 1, dans lequel
les nervures rigides (50, 51, 52, 53, 54, 55, 56, 57) qui sont formées dans la zone de corps principal, en partant du point de référence (P) vers la deuxième extrémité dans la direction de largeur de véhicule comprennent : une première nervure oblique (50) qui est formée dans une direction inclinée vers le bas vers la deuxième extrémité dans la direction de largeur de véhicule ; et une deuxième nervure oblique (51) qui est formée dans une direction inclinée vers le haut vers la deuxième extrémité dans la direction de largeur de véhicule et croise la première nervure oblique (50).

3. Conduit de support de radiateur (10) fabriqué en résine selon la revendication 2, dans lequel
le composant de support (12) et le composant de conduit (40) sont reliés l'un à l'autre quand plusieurs sections de blocage de support (17a, 17b, 18a, 18b) qui sont formées dans les deux parties d'extrémité du composant de support (12) dans une direction verticale et plusieurs sections de blocage de conduit (48a, 48b) qui sont formées dans les deux parties d'extrémité du composant de conduit (40) dans la direction verticale sont bloquées, et
près d'une section des plusieurs sections de blocage de conduit (48a, 48b) qui se trouvent sur un côté dans la direction verticale, au moins une extrémité de chacune de la première nervure oblique (50) et de la deuxième nervure oblique (51) dans la direction verticale est disposée dans une position dans la direction de largeur de véhicule qui correspond à la section des plusieurs sections de blocage de conduit (48a, 48b) sur le côté dans la direction verticale.

4. Conduit de support de radiateur (10) fabriqué en résine selon la revendication 2, dans lequel
les nervures rigides (50, 51, 52, 53, 54, 55, 56, 57) qui sont formées par rapport au point de référence (P) dans la zone de corps principal vers la deuxième extrémité dans la direction de largeur de véhicule comprennent une nervure intermédiaire (53) qui est formée verticalement le long de la surface extérieure de la zone de corps principal de manière à croiser une intersection de la première nervure oblique (50) et de la deuxième nervure oblique (51) .

5. Conduit de support de radiateur (10) fabriqué en résine selon la revendication 4, dans lequel
le composant de support (12) et le composant de conduit (40) sont reliés l'un à l'autre quand des sections de blocage de support (17a, 17b, 18a, 18b) qui sont formées dans les deux parties d'extrémité du composant de support (12) dans une direction verticale et des sections de blocage de conduit (48a, 48b) qui sont formées dans les deux parties d'extrémité du composant de conduit (40) dans la direction verticale sont bloquées, et
près de la section de blocage de conduit (48a) qui se trouve sur un côté dans la direction verticale, au moins une extrémité de la nervure intermédiaire (53) dans la direction verticale est disposée dans une position dans la direction de largeur de véhicule qui correspond à la section de blocage de conduit (48a) sur le côté dans la direction verticale.
